## Europäisches Patentamt
## European Patent Office
## Office européen des brevets

(19)

(11) Veröffentlichungsnummer: **0 033 122**
**A1**

(12) **EUROPÄISCHE PATENTANMELDUNG**

(21) Anmeldenummer: **81100392.0**

(22) Anmeldetag: **20.01.81**

(51) Int. Cl.³: **H 04 L 5/24**
**H 04 J 6/00**

(30) Priorität: **28.01.80 DE 3002929**

(43) Veröffentlichungstag der Anmeldung:
**05.08.81 Patentblatt 81/31**

(84) Benannte Vertragsstaaten:
**AT BE CH IT LI NL SE**

(71) Anmelder: **SIEMENS AKTIENGESELLSCHAFT Berlin und München**
**Postfach 22 02 61**
**D-8000 München 22(DE)**

(72) Erfinder: **Niethammer, Dieter, Ing. grad.**
**Zugspitzstrasse 34**
**D-8011 Putzbrunn(DE)**

(54) **Verfahren und Schaltungsanordnung zum Übertragen von Daten in einem synchronen Datennetz.**

(57) Die Erfindung bezieht sich auf ein Verfahren und eine Schaltungsanordnung zum Übertragen von Daten in einem envelopestrukturierten synchronen Datennetz.

Eine Mehrzahl von Endeinrichtungen (E1 bis En) ist über eine Multiplexeinrichtung (MX) mit dem Datennetz verbindbar. Die Multiplexeinrichtung (MX) faßt jeweils eine Mehrzahl von Envelopes (EN) einer Mehrzahl von Datenkanälen (K1 bis Kn) zu einem Multiplexrahmen (MR) zusammen. Der Multiplexrahmen (MR) enthält die Datenbits (D) der Envelopes (EN) und einen Teil der Steuerbits (S, A) der Envelopes (EN). Der verbleibende Teil der Steuerbits (S, A) wird durch Zuordnungsbits (Z) ersetzt, die eine Zuordnung der Datenbits (D) des Multiplexrahmens (MR) zu den einzelnen Datenkanälen (K1 bis Kn) festlegen.

**FIG 3**

| | EN1 | | EN 2 | | EN 3 | | EN 4 | |
|---|---|---|---|---|---|---|---|---|
| a) | S\|A| D 11 | S\|A| D 21 | S\|A| D 12 | S\|A| D 22 |

|  | ← MR → | | | | |
|---|---|---|---|---|---|
| b) | Z | S | D11 | D21 | D12 | D22 |

| c) | Z | S | D11 | D21 | D12 | D22 |
|---|---|---|---|---|---|---|

| d) | S | D11 | Z1 | D21 | Z2 | D12 | Z3 | D22 |
|---|---|---|---|---|---|---|---|---|

0033122

SIEMENS AKTIENGESELLSCHAFT        Unser Zeichen

Berlin und München               VPA    80 P 2 3 0 5 E

Verfahren und Anordnung zum Übertragen von Daten in einem
synchronen Datennetz.

Die Erfindung bezieht sich auf ein Verfahren zum Übertragen von Daten in synchronen Datennetzen, bei dem die Daten gruppenweise in aus Steuerbits und Datenbits gebildeten Envelopes übertragen werden und bei dem eine Mehrzahl von Endeinrichtungen über jeweils einen Datenkanal mit dem Datennetz verbindbar ist und bei dem Anschlußleitungen zwischen den Endeinrichtungen und dem Datennetz mehrfach ausgenutzt werden. Weiterhin bezieht sich die Erfindung auf eine Schaltungsanordnung zur Durchführung des Verfahrens.

Es ist bereits allgemein bekannt, zur Übertragung von Daten ein synchrones Datennetz zu verwenden, bei dem die Endeinrichtungen über Anschlußgeräte mit dem Datennetz verbunden sind. Die Anschlußgeräte fassen die von den Endeinrichtungen kommenden Daten in Blöcke zusammen, die als Envelopes bezeichnet werden. Jedes Envelope hat eine konstante Länge und besteht aus einer vorgegebenen konstanten Anzahl von Datenbits und zwei Steuerbits, die als Synchronisierbit und Zustandsbit bezeichnet werden. Die Steuerbits stehen beispielsweise am Anfang des Envelopes oder das Envelope beginnt mit dem Synchronisierbit und endet mit dem Zustandsbit. Das Synchronisierbit ermöglicht das Herausfinden der Datenbits und die Rückgewinnung des Zustandsbits aus einem empfangenen Bitstrom. Das Zustandsbit gibt einer Vermittlungseinrichtung des Datennetzes an, ob es sich bei den in den Datenbits enthaltenen Daten um Nachrichten von Teilnehmer zu Teilnehmer oder um Nachrichten für die in der Verbindung befindlichen Vermittlungsämter bzw. um Steuerinformationen für die Datenendeinrichtungen handelt.

Ret 1 Ram /23.1.1980

Für die Bildung der Envelopes sind entsprechend CCITT X.50 zwei Strukturen bekannt, nämlich eine 6+2-Struktur und eine 8+2-Struktur. Im ersten Fall werden die Envelopes aus sechs Datenbits, einem Synchronisierbit und einem Zustandsbit gebildet. Im letzteren Fall werden die Envelopes aus acht Datenbits, einem Synchronisierbit und einem Zustandsbit gebildet. Da die Bildung der Envelopes bei der Übertragung von Daten beim Teilnehmer in den Anschlußgeräten erfolgt, werden die Envelopes über die Teilnehmeranschlußleitungen zum zugeordneten Vermittlungsamt übertragen. Durch die zusätzlichen Steuerbits ist der zu übertragende Bruttobitstrom um 30 % bzw. 25 % höher als der Nettobitstrom zwischen der Endeinrichtung und dem Anschlußgerät.

Die bekannten Anschlußgeräte sind einkanalig ausgebildet und können damit nur mit einer Endeinrichtung Daten austauschen. Es ist denkbar, einem Anschlußgerät einen Schnittstellenvervielfacher vorzuschalten, jedoch hätte eine derartige Anordnung den Nachteil, daß jeweils nur eine Datenendeinrichtung während einer vorgegebenen Zeitdauer Daten an das Datennetz abgeben kann.

Aus der DE-AS 28 28 602 ist es bekannt, das Envelope selbst als Multiplexrahmen zu verwenden. Die einzelnen Datenbits des Envelopes werden in diesem Fall verschiedenen Datenkanälen zugeordnet. Die Zuordnung der Datenkanäle zu den Datenbits erfolgt durch die Steuerbits der Envelopes.

Es wäre auch denkbar, eine Mehrzahl von Datenendeinrichtungen über einen Kanalteiler anzuschalten, der entsprechend einem bekannten Zeitmultiplexverfahren die Endeinrichtungen mit dem Datennetz verbindet. Bei der Verwendung eines üblichen Zeitmultiplexverfahrens werden auch hier zusätzliche Synchronisiereinrichtungen erforderlich, die beim sendenden und beim empfangenden Teilnehmer die richtige Zuordnung zwischen den Datenkanälen herstellt.

Eine derartige Anordnung hätte damit den Nachteil, daß sie einen verhältnismäßig großen Anfangsaufwand erfordert, der erst dann vertretbar wird, wenn eine große Anzahl von Datenkanälen vorhanden ist. Außerdem müßten zusätzliche Bits eingefügt werden, die die Zuordnung der einzelnen Envelopes zu den Datenkanälen kennzeichnen.

Der Erfindung liegt daher die Aufgabe zugrunde, ein Verfahren zum Übertragen von envelopestrukturierten Daten von einer Mehrzahl von Endeinrichtungen zu einem synchronen Datennetz anzugeben, das entsprechend einem Zeitmultiplexverfahren arbeitet und das ohne die Verwendung von zusätzlichen Bits eine optimale Synchronisierung der Multiplexrahmen ermöglicht.

Erfindungsgemäß wird die Aufgabe bei dem Verfahren der eingangs genannten Art dadurch gelöst, daß sendeseitig jeweils eine Mehrzahl von Envelopes eines Datenkanals von einer Mehrzahl von Datenkanälen zu Multiplexrahmen zusammengefaßt werden, in denen die Datenbits dieser Envelopes enthalten sind und in denen jeweils ein Teil der Steuerbits der Envelopes durch Zuordnungsbits ersetzt wird , die die Zuordnung der Datenbits jedes Multiplexrahmens zu den Datenkanälen festlegen und daß empfangsseitig unter Verwendung dieser Zuordnungsbits jeder Multiplexrahmen wieder in den Datenkanälen zugeordnete Envelopes aufgeteilt wird und gleichzeitig die Steuerbits der Envelopes wieder erzeugt werden.

Das Verfahren gemäß der vorliegenden Erfindung hat den Vorteil, daß durch das Ersetzen eines Teils der Steuerbits durch die Zuordnungsbits auf einfache Weise, ohne die Verwendung von zusätzlichen Bits die Multiplexrahmen synchronisiert werden können und die Datenbits der Multiplexrahmen wieder auf die einzelnen Datenkanäle aufgeteilt werden können. Das Verfahren fordert einen geringen Aufwand und ist insbesondere dann in vorteilhafter Weise einsetzbar, wenn eine geringe Anzahl von Teilnehmern vorhanden ist.

Das Verfahren erfordert insbesondere dann einen geringen Aufwand, wenn in den Steuerbits enthaltene Synchronisierbits durch die Zuordnungsbits ersetzt werden und wenn in den Steuerbits enthaltene Zustandsbits in den Multiplexrahmen unverändert übernommen werden.

Falls für die Synchronisierung des Multiplexrahmens mehr Zuordnungsbits erforderlich sind, als in den Envelopes Synchronisierbits vorhanden sind, ist es günstig, wenn die in den Steuerbits enthaltenen Synchronisierbits und ein Teil der in den Steuerbits enthaltenen Zustandsbits durch die Zuordnungsbits ersetzt werden und wenn der verbleibende Teil der Zustandsbits in den Multiplexrahmen übernommen wird.

Es ist möglich, den Multiplexrahmen derart zu gestalten, daß die Datenbits aufeinanderfolgend im Multiplexrahmen angeordnet werden. Es kann jedoch auch von Vorteil sein, daß die Zuordnungsbits im Multiplexrahmen zwischen den Datenbits verteilt angeordnet werden.

Eine vorteilhafte Schaltungsanordnung zur Durchführung des Verfahrens ist dadurch gekennzeichnet, daß eine Multiplexeinrichtung vorgesehen ist, die einerseits mit den Endeinrichtungen und andererseits mit dem Datennetz verbunden ist, die sendeseitig jeweils die vorgegebene Anzahl von Envelopes unter Abtrennung eines Teils der Steuerbits und Hinzufügen der Zuordnungsbits zusammenfaßt und die empfangsseitig unter Verwendung der Zuordnungsbits die Datenbits wieder auf die den einzelnen Datenkanälen zugeordneten Envelopes aufteilt.

Eine vorteilhafte Ausführungsform der Multiplexeinrichtung wird dadurch erreicht, daß die Multiplexeinrichtung sendeseitig eine der Anzahl der Datenkanäle entsprechende Anzahl von Schieberegistern, in die die Envelopes der einzelnen Datenkanäle seriell eingespeichert werden, eine Synchronisierstufe, die mit den parallelen Ausgängen der Schieberegister verbunden ist und die die Zuordnungsbits erzeugt und ein weiteres Schieberegister enthält, in das die Datenbits der Envelopes, die Zuordnungsbits und der verbleibende Teil der Steuerbits parallel eingespeichert werden und das an seinem seriellen Ausgang die Multiplexrahmen abgibt und wenn die Multiplexeinrichtung empfangsseitig ein Schieberegister, in das die empfangenen Multiplexrahmen seriell eingespeichert werden, eine Synchronisierstufe, an der die Bits des Multiplexrahmens anliegen und die die Synchronisierbits der Envelopes erzeugt und eine der Anzahl der Datenkanäle entsprechende Anzahl von weiteren Schieberegistern enthält, denen die Datenbits, die Zustandsbits und die Synchronisierworte zugeführt werden und die an ihren seriellen Ausgängen die den einzelnen Datenkanälen zugeordneten Envelopes abgeben.

Im folgenden wird ein Ausführungsbeispiel einer Schaltungsanordnung zum Durchführen des Verfahrens anhand von Zeichnungen beschrieben. Es zeigen:

Fig. 1 ein Blockschaltbild eines Teils einer bekannten Datenübertragungsanordnung,

Fig. 2 ein Blockschaltbild einer für die Durchführung des Verfahrens geeigneten Datenübertragungsanordnung,

Fig. 3 Darstellungen von Envelopes und Multiplexrahmen,

Fig. 4 ein Blockschaltbild der Sendeseite einer Multiplexeinrichtung,

Fig. 5 ein Blockschaltbild der Empfangsseite der Multiplexeinrichtung.

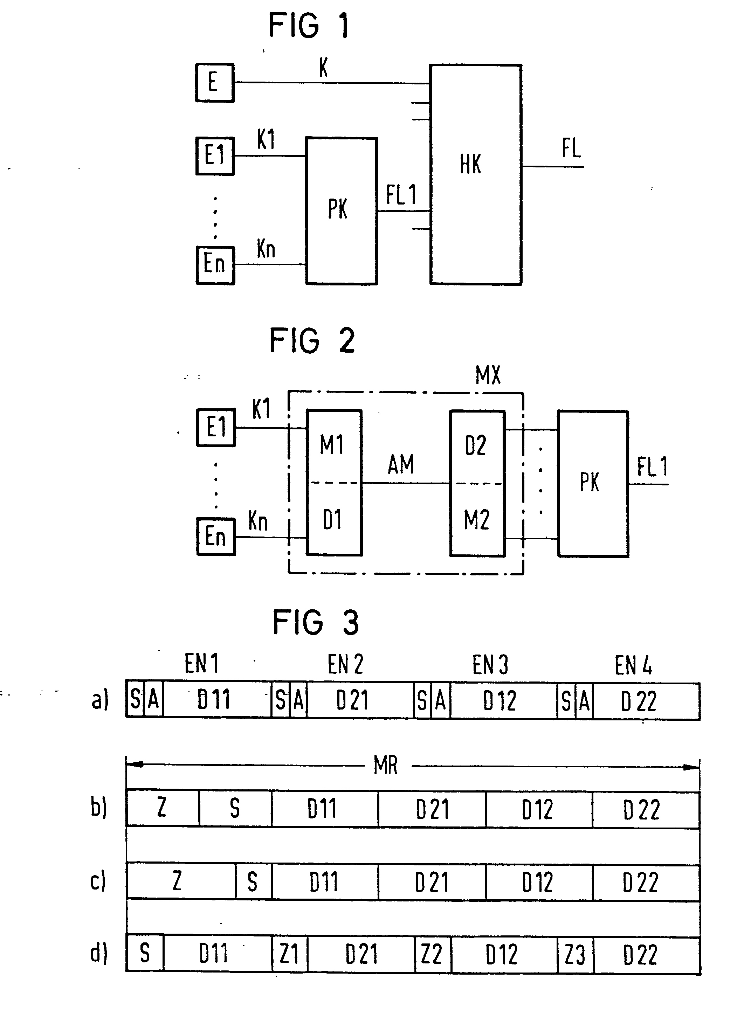

Bei dem in Fig. 1 dargestellten Teil einer bekannten Datenübertragungsanordnung werden von einer Mehrzahl von Endeinrichtungen E, E1 bis En Daten über Datenkanäle K, K1 bis Kn übertragen. Die Endeinrichtung E ist beispielsweise über ihren als Anschlußleitung ausgebildeten Datenkanal K direkt an einem Hauptknoten HK eines synchronen Datennetzes angeschlossen, der seinerseits an einer Fernleitung FL angeschlossen ist. Die Endeinrichtungen E1 bis En sind über die Datenkanäle K1 bis Kn an einen peripheren Knoten PK und eine Fernleitung FL1 an dem Hauptknoten HK angeschlossen. Der periphere Knoten PK und der Hauptknoten HK sind beispielsweise Bestandteile eines Zeitmultiplexsystems in einem synchronen Datennetz. Die Endeinrichtungen E, E1 bis En enthalten Anschlußgeräte, die die Daten zeichenweise zusammenfassen und Envelopes bilden. Beispielsweise werden jeweils sechs Datenbits mit zwei Steuerbits, nämlich einem Synchronisierbit und einem Zustandsbit versehen. Die in Fig. 1 dargestellten Endeinrichtungen E, E1 bis En sind jeweils über eigene Anschlußleitungen an den Hauptknoten HK bzw. an den peripheren Knoten PK angeschlossen.

Bei der in Fig. 2 dargestellten Schaltungsanordnung ist zwischen den Endeinrichtungen E1 bis En und dem peripheren Knoten PK eine Multiplexeinrichtung MX angeordnet, die jeweils aus einem Multiplexer M1 bzw. M2 und einem Demultiplexer D1 bzw. D2 gebildet wird. Zwischen den Multiplexern und dem Demultiplexer ist nur noch eine einzige Anschlußleitung AM erforderlich.

In Fig. 3 sind unter a mehrere Envelopes EN1 bis EN4 dargestellt, die jeweils aus Datenbits D11 bis D22 und Steuerbits S und A gebildet werden. Beispielsweise enthält jedes Envelope sechs Datenbits D. Die Steuerbits werden aus einem Zustandsbit S und einem Synchronisierbit A gebildet. Die Envelopes EN1 bis EN4 sind beispielsweise den Endeinrichtungen E1 und E2 zugeordnet und werden über die Datenkanäle K1 und K2 übertragen. Über den Kanal K1 werden die Datenbits D11 und D12 übertragen, während über den Kanal die Datenbits D21 und D22 übertragen werden.

Unter b ist ein Multiplexrahmen MR dargestellt, der durch die Multiplexeinrichtung MX erzeugt wird. Der Multiplexrahmen MR wird aus den Datenbits D11 bis D22 der Envelopes EN1 bis EN4, den Zustandsbits S der Envelopes EN1 bis EN4

0033122

und vier Zuordnungsbits Z gebildet, die die Zuordnung der Datenbits D11 bis D22 zu den Datenkanälen K1 und K2 festlegen und die die Synchronisierung des Multiplexrahmens MR ermöglichen. Bei der Bildung des Multiplexrahmens MR werden in der Multiplexeinrichtung MX die Synchronisierbits A der Envelopes EN1 bis EN4 abgestreift und es werden nach synchronisiertechnischen Gesichtspunkten der Multiplexeinrichtung MX stattdessen diese Zuordnungsbits Z erzeugt und anstelle der Synchronisierbits A eingefügt. Empfangsseitig werden bei der Aufteilung der Datenbits D11 bis D22 des Multiplexrahmens MR auf die den Datenkanälen K und K2 zugeordneten Envelopes EN1 bis EN4 diese Zuordnungsbits Z wieder abgestreift und es werden dann wieder neue Synchronisierbits A erzeugt und neben den Zustandsbits S den Datenbits D11 bis D22 zugefügt.

Die Umformung der vier Synchronisierbits A zu vier neuen Zuordnungsbits hat den Vorteil, daß nunmehr entsprechnd den beiden Kanälen nicht nur jeweils zwei gleiche Synchronisierbits, sondern vier für die Zuordnung geeignete Zuordnungsbits zur Verfügung stehen.

Unter c ist in Fig. 3 ein Multiplexrahmen dargestellt, der sich von dem unter b dargestellten Multiplexrahmen dadurch unterscheidet, daß die Anzahl der Zustandsbits S zugunsten der Zuordnungsbits Z vermindert wurde, um eine gegenüber Verfahren b verbesserte Synchronisierung des Multiplexrahmens zu erreichen.

Der unter d dargestellte Multiplexrahmen entspricht im wesentlichen dem unter c dargestellten Multiplexrahmen und unterscheidet sich von diesem lediglich dadurch, daß die Zuordnungsbits Z zwischen die Datenbits D11 bis D22 als Zuordnungsbits Z1 bis Z3 eingefügt wurden, um eine etwa gleichmäßige Verteilung der Zuordnungsbits Z zu erreichen.

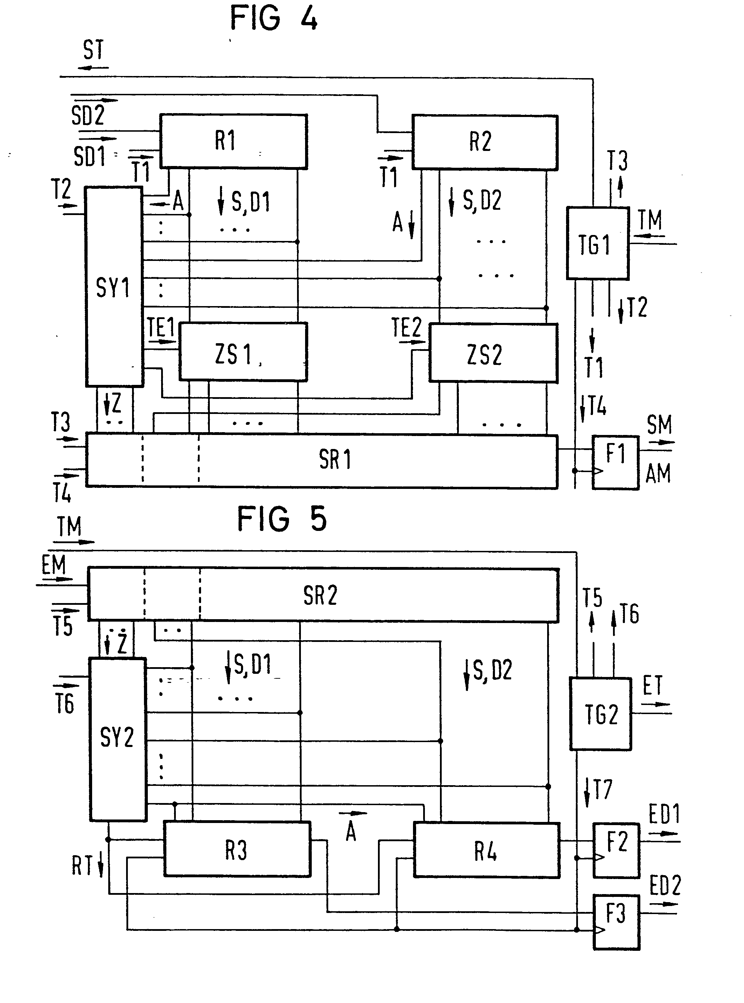

Bei dem in Fig. 4 dargestellten Multiplexer der Multiplexeinrichtung MX wird angenommen, daß ein Multiplexrahmen MR erzeugt wird, der dem in Fig. 3 unter b dargestellten Multiplexrahmen MR entspricht. Ein Taktgeber TG1 erzeugt in Abhängigkeit von einem Multiplextakt TM einen Sendetakt ST, der den Endeinrichtungen E1 und E2 zugeführt wird. Die Endeinrichtungen E1 und E2 senden Sendedaten SD1 und SD2 an Schieberegister R1 und R2. Mit Hilfe von im Taktgeber TG1 erzeugten Taktimpulsen T1 werden die Sendedaten SD1 und SD2 seriell in die Schieberegister R1 und R2 eingespeichert. Die Ausgänge der Schieberegister R1 und R2 sind mit einer Synchronisierstufe SY1 verbunden, die durch Taktimpulse T2 gesteuert wird. Wenn ein vollständiges Envelope jeweils in einem der Register R1 oder R2 gespeichert ist, werden die Datenbits D11 bis D22 und die Zustandsbits S durch in der Synchronisiereinrichtung SY1 erzeugte Taktimpulse TE1 bis TE4 als Signale D1 bzw. D2 in Zwischenspeicher ZS1 und ZS2 eingespeichert. Zunächst werden in die Register R1 und R2 die Envelopes EN1 und EN2 eingespeichert. Anschließend werden die Envelopes EN3 und EN4 eingespeichert, so daß dann der Multiplexrahmen MR vollständig ist. Die Synchronisiereinrichtung SY1 erzeugt die Zuordnungsbits Z, die die Zuordnung der Datenbits D11 bis D22 im Multiplexrahmen MR zu den Datenkanälen K1 und K2 festlegen. Diese Zuordnungsbits Z, die Zustandsbits S und die Datenbits D11 bis D22 werden mit Hilfe von Taktimpulsen T3 zeitlich nacheinander in ein Schieberegister SR1 eingespeichert. Anschließend werden sie unter Verwendung von Taktimpulsen T4 seriell aus dem Schieberegister SR1 ausgelesen, in einem Flipflop F1 zwischengespeichert und als Sendedaten SM über die Anschlußleitung AM zum entsprechenden Demultiplexer übertragen.

Der in Fig. 5 dargestellte Demultiplexer enthält ein dem Schieberegister SR1 entsprechendes Schieberegister SR2, dessen seriellem Eingang die Datensignale EM zugeführt werden, die den Datensignalen SM entsprechen. Ein Taktgeber

0033122
80 P 2305 E

TG2 erzeugt aus den Taktimpulsen TM Taktimpulse T5,.mit denen das serielle Einspeichern der Datensignale EM in das Schieberegister SR2 erfolgt. Die Zuordnungsbits Z werden einer Synchronisiereinrichtung SY2 zugeführt, die den vollständigen Multiplexrahmen MR erkennt. Unter Verwendung von Taktimpulsen T6 erzeugt die Synchronisiereinrichtung SY2 Synchronisierbits A und Taktimpulse RT, mit denen die Synchronisierbits A, die Zustandsbits S und die Datenbits D11 bis D22 zeitlich nacheinander in Schieberegister R3 und R4 eingespeichert werden. In diesen Schieberegistern R3 und R4 sind damit nacheinander die den Endeinrichtungen E1 und E2 zugeordneten Envelopes EN1 bis EN4 gespeichert. Unter Verwendung von Taktimpulsen T7 werden die Schieberegister R3 und R4 seriell ausgelesen und die Envelopes EN1 bis EN4 gelangen über Flipflops F2 und F3 als Empfangsdaten ED1 und ED2 wieder zu den einzelnen Datenkanälen K1 und K2. Gleichzeitig erzeugt der Taktgeber TG2 den Empfangsdaten ED1 und ED2 zugeordnete Taktimpulse ET.

Auf der dem Datennetz zugeordneten Seite der Multiplexeinrichtung MX kann im Demultiplexer zwischen dem Schieberegister SR2 und den Schieberegistern R3 und R4 ein weiterer Zwischenspeicher eingefügt werden, um eine Anpassung an einen Knotentakt des Datennetzes zu erreichen.

8 Patentansprüche
5 Figuren

Patentansprüche

1. Verfahren zum Übertragen von Daten in synchronen Datennetzen, bei dem die Daten gruppenweise in aus Steuerbits und Datenbits gebildeten Envelopes übertragen werden, bei dem eine Mehrzahl von Endeinrichtungen über jeweils einen Datenkanal mit dem Datennetz verbindbar ist und bei dem Anschlußleitungen zwischen den Endeinrichtungen und dem Datennetz mehrfach ausgenutzt werden, d a d u r c h g e k e n n z e i c h n e t, daß sendeseitig jeweils eine Mehrzahl von Envelopes eines Datenkanals von einer Mehrzahl von Datenkanälen (K1 bis Kn) zu Multiplexrahmen (MR) zusammengefaßt werden, in denen die Datenbits (D) dieser Envelopes (EN) enthalten sind und in denen jeweils ein Teil der Steuerbits (S, A) der Envelopes (EN) durch Zuordnungsbits (Z) ersetzt wird ,die die Zuordnung der Datenbits (D) jedes Multiplexrahmens (MR) zu den Datenkanälen (K1 bis Kn) festlegen und daß empfangsseitig unter Verwendung dieser Zuordnungsbits (Z) jeder Multiplexrahmen (MR) wieder in den Datenkanälen (K1 bis Kn) zugeordnete Envelopes (EN) aufgeteilt wird und gleichzeitig die Steuerbits (S, A) der Envelopes (EN) wieder erzeugt werden.

2. Verfahren nach Anspruch 1, d a d u r c h g e - k e n n z e i c h n e t, daß in den Steuerbits (S, A) enthaltene Synchronisierbits (A) durch die Zuordnungsbits (Z) ersetzt werden und daß in den Steuerbits (S, A) enthaltene Zustandsbits (S) in den Multiplexrahmen (MR) unverändert übernommen werden.

3. Verfahren nach Anspruch 1, d a d u r c h g e - k e n n z e i c h n e t, daß die in den Steuerbits (S, A) enthaltenen Synchronisierbits (A) und ein Teil der in den Steuerbits (S, A) enthaltenen Zustandsbits (S) durch die Zuordnungsbits (Z) ersetzt werden und daß der verbleibende Teil der Zustandsbits (S) in den Multiplexrahmen (MR) übernommen werden.

4. Verfahren nach einem der Ansprüche 1 bis 3, d a -
d u r c h  g e k e n n z e i c h n e t, daß die Datenbits (D) aufeinanderfolgend im Multiplexrahmen (MR) angeordnet werden.

5. Verfahren nach einem der Ansprüche 1 bis 3, d a -
d u r c h  g e k e n n z e i c h n e t, daß die Zuordnungsbits (Z) im Multiplexrahmen (MR) zwischen die Datenbits (D) verteilt angeordnet werden.

6. Schaltungsanordnung zur Durchführung des Verfahrens
nach einem der Ansprüche 1 bis 5, d a d u r c h  g e -
k e n n z e i c h n e t,  daß eine Multiplexeinrichtung
(MX) vorgesehen ist, die einerseits mit den Endeinrichtungen (E1 bis En) und andererseits mit dem Datennetz (FL1)
verbunden ist, die sendeseitig jeweils die vorgegebene Anzahl von Envelopes (EN) unter Abtrennung eines Teils der
Steuerbits (S, A) und Hinzufügen der Zuordnungsbits (Z)
zusammenfaßt und die empfangsseitig unter Verwendung der
Zuordnungsbits (Z) die Datenbits (D) wieder auf die den
einzelnen Datenkanälen (K1 bis Kn) zugeordneten Envelopes
(EN) aufteilt.

7. Schaltungsanordnung nach Anspruch 6, d a d u r c h
g e k e n n z e i c h n e t, daß die Multiplexeinrichtung
(MX) sendeseitig eine der Anzahl der Datenkanäle (K1 bis
Kn) entsprechende Anzahl von Schieberegistern (R1, R2), in
die die Envelopes (EN) der einzelnen Datenkanäle (K1, K2)
seriell eingespeichert werden, eine Synchronisierstufe (SY1),
die mit den parallelen Ausgängen der Schieberegister (R1,
R2) verbunden ist und die die Zuordnungsbits (Z) erzeugt
und ein weiteres Schieberegister (SR1) enthält, in das die
Datenbits (D) der Envelopes (EN), die Zuordnungsbits (Z)
und der verbleibende Teil der Steuerbits (S) parallel eingespeichert werden und das an seinem seriellen Ausgang die
Multiplexrahmen (MR) abgibt.

8. Schaltungsanordnung nach Anspruch 6, d a d u r c h
g e k e n n z e i c h n e t, daß die Multiplexeinrichtung
(MX) empfangsseitig ein Schieberegister (SR2), in das die
empfangenen Multiplexrahmen (MR) seriell eingespeichert
werden, eine Synchronisierstufe (SY2), an der die Bits
des Multiplexrahmens (MR) anliegen und die die Synchronisierbits (A) der Envelopes (EN) erzeugt, und eine der Anzahl der Datenkanäle (K1, K2) entsprechende Anzahl von weiteren Schieberegistern (R3, R4) enthält, denen die Datenbits (D), die Zustandsbits (S) und die Synchronisierbits
(A) zugeführt werden und die an ihrem seriellen Ausgang
die den einzelnen Datenkanälen (K1, K2) zugeordneten Envelopes (EN) abgeben.

1/2

## FIG 1

## FIG 2

## FIG 3

FIG 4

FIG 5

0033122

0033122

Nummer der Anmeldung

EP 81 10 0392

Europäisches
Patentamt

**EUROPÄISCHER RECHERCHENBERICHT**

| | EINSCHLÄGIGE DOKUMENTE | | KLASSIFIKATION DER ANMELDUNG (Int Cl ⁴) |
|---|---|---|---|
| Kategorie | Kennzeichnung des Dokuments mit Angabe, soweit erforderlich, der maßgeblichen Teile | betrifft Anspruch | |
| | PROCEEDINGS OF THE IEEE, Band 60, Nr. 11, November 1972, Seiten 1313-1321 New York, U.S.A. D.R. DOLL: "Multiplexing and concentration" <br><br> * Seite 1315, linke Spalte, Zeilen 6-22; Figur 4 * <br><br> -- | 1 | H 04 L 5/24 H 04 J 6/00 |
| A | DE - B - 2 652 038 (SIEMENS) <br><br> * Spalte 4, Zeilen 8-13; Spalte 4, Zeilen 56-62; Figur 2 * <br><br> ---- | 1 | |
| | | | RECHERCHIERTE SACHGEBIETE (Int. Cl ⁴) <br><br> H 04 L   5/24 <br>         5/22 <br>         11/00 <br> H 04 J   6/00 <br>         3/16 |
| | | | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 24-04-1981 | STRASSEN |

EPA form 1503.1   06.78